# EUROPEAN PATENT SPECIFICATION

(11) **EP 2 769 607 B1**
(45) Date of publication and mention of the grant of the patent: **28.06.2017**
(21) Application number: 14155310.7
(22) Date of filing: 17.02.2014
(51) Int. Cl.: A01B 59/00, A01B 59/041

(54) **Side stabilizer for agricultural machines**
Seitenstabilisator für landwirtschaftliche Maschinen
Stabilisateur latéral pour les machines agricoles

(30) Priority: 22.02.2013 IT MO20130045
(43) Date of publication of application: 27.08.2014
(73) Proprietor: CBM - S.P.A., 41122 Modena (IT)
(72) Inventor: Cornia, Enrico Maria, 41122 Modena (IT)
(74) Representative: Zoli, Filippo

(56) References cited:
- EP-A1- 0 904 680
- EP-A1- 1 084 602
- EP-A2- 0 998 838

## Description

The present invention relates to a side stabilizer for agricultural machines.

In the field of agricultural machines it is known to use the so-called three-point linkages to allow the attachment of tools or operating machines.

The three-point linkages have a pair of side arms movable between a work position, in which they are lowered to allow the use of the tools connected to them, and an idle position, in which they are raised with respect to the ground to facilitate the movement of the agricultural machine.

Generally, the side arms must have a certain degree of freedom when they are in the lowered position, while they have to be rigidly connected to the rest of the structure when they are arranged in the raised position in order to avoid unwanted stress.

To meet these requirements stabilization devices are employed which are connected on one side to the structure of the agricultural machine and on the other side to a corresponding side arm of the three-point linkage.

More in detail, the stabilizing elements generally comprise a hollow body, intended to be connected to the agricultural machine, and a cylindrical element, intended to be connected to one of said side arms and coupled to the hollow body in a sliding manner. Between the hollow body and the cylindrical element elastic means are also interposed able to apply a return force on the corresponding side arm, with the latter in the work position, to bring it to a predefined neutral position. Blocking means are also provided that can be operated to prevent or allow the relative shift of the hollow body and of the cylindrical element.

The blocking means are generally of the mechanical type and are selectively movable between a blocking position and a floating position.

A known stabilizer having blocking means of the mechanical type is described by EP 1342399, which involves the use of a blocking member hinged at one end to the hollow body and having, at the opposite end, a pair of recesses able to cooperate with the respective protrusions defined on the cylindrical element.

More in particular, such blocking member is movable between a blocking position, wherein it engages with the protrusions defined on the cylindrical element to prevent the shifts of the latter in both directions, and at least a floating position, wherein it is disengaged from the aforementioned protrusions and thus allows the cylindrical element to move with respect to the hollow body.

This known stabilization device has a number of drawbacks.

The stabilization device described above, in fact, appears to be not easy to make and function due to the complex interrelationship between the elements that make it up.

More particularly, the hollow body, the cylindrical element and the blocking member must be made with precise machining tolerances in order to allow their mutual engagement in the different work positions and, therefore, the correct operation of the stabilization device itself.

Still another drawback of the stabilization device described above consists in that it does not allow to flexibly adapt to different work conditions. This is due in particular to the fact that it has only two operating conditions, i.e., depending on the position of the blocking member it allows or prevents the relative movement of the stabilization elements.

These drawbacks have been at least partly overcome by introducing hydraulically-operated blocking means.

An example of a known stabilization device comprising hydraulic blocking means is described by EP 1084601 which envisages the presence of a tubular locator element fitted sealed in the hollow body above and inside which the cylindrical element is housed sliding.

By hydraulically adjusting the position of the locator element, the end-of-stroke position of the cylindrical element fitted inside it is adjusted accordingly.

The locator element, which supports a pair of plates which engage with a lever associated with the cylindrical element to prevent the rotation of the latter around its own axis, protrudes from the open extremity of the hollow body and extends outwards.

Nevertheless, the stabilizer described by EP 1084601 also has a number of drawbacks.

In particular, this type of stabilizer can not ensure the proper sealing over time of the pressurized chamber acting on the locator element. This is due to the fact that the lateral surface of the locator element is exposed to external agents that could damage it, thus jeopardizing the surface finish and, as a consequence, the correct coupling with the sealing members.

Another drawback of the stabilizer known from EP 1084601 consists in the complex manufacture of the anti-rotation means of the cylindrical element with respect to the hollow body. Another side stabilizer is also known from EP 0 904 680 which comprises a hollow body open at one extremity and closed at the opposite extremity, a cylindrical element fitted sliding inside the hollow body, a locator element fitted tight and mobile inside said hollow body, protection means of the locator element placed between the hollow body and the cylindrical element, where the protection element is movable with respect to the hollow body.The main aim of the present invention is to provide a side stabilizer for agricultural machines that allows to overcome the drawbacks of known devices.

In particular, the present invention aims at providing a side stabilizer that, besides controlling the stop of the cylindrical element in a fluid-dynamic manner is also safer as far as operation is concerned with respect to the stabilizers of known type.

Within this aim, an object of the present invention is to ensure, in use, the sealing between the blocking means of the position of the cylindrical element and the hollow body.

Yet another object is to provide a side stabilizer for agricultural machines that have anti-rotation means of the cylindrical element with respect to the hollow body which are simpler to manufacture than those of known type.

The above mentioned objects are achieved by the present side stabilizer for agricultural machines according to claim 1.

Other characteristics and advantages of the present invention will become more evident from the description of a preferred, but not exclusive, embodiment of a side stabilizer for agricultural machines, illustrated purely as an example but not limited to the annexed drawings in which:
Figure 1 is a schematic representation, in side elevation, of a pair of side stabilizers coupled to respective side arms of a three-point linkage;

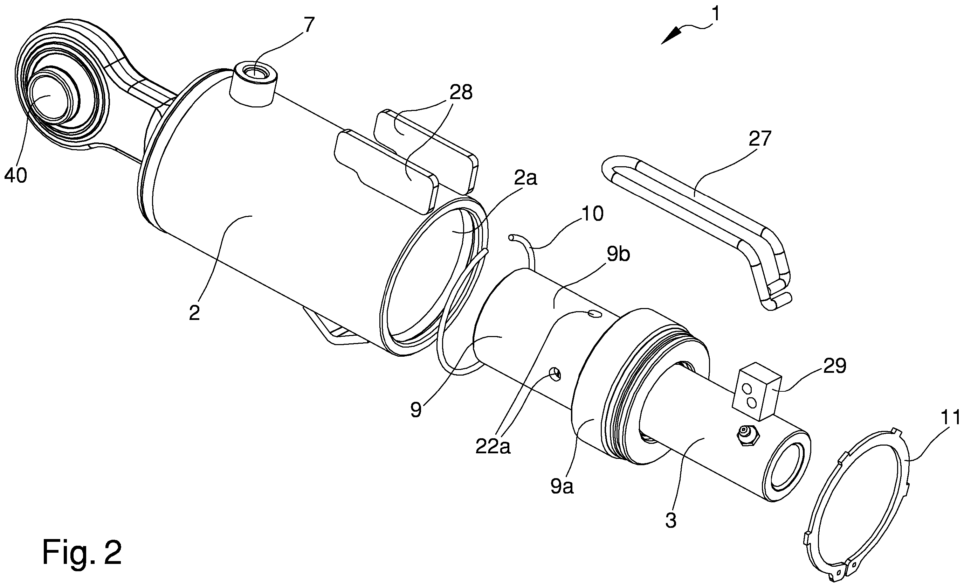

Figure 2 is an exploded view of a stabilizer according to the invention;
Figure 3 is a top view of the stabilizer of Figure 2;
Figure 4 is a sectional view of the stabilizer of Figure 2;

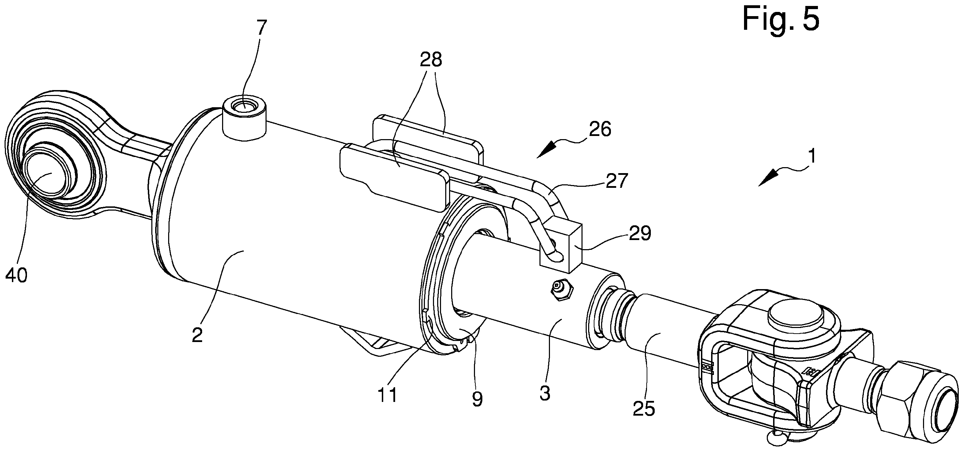

Figure 5 is an axonometric view of the stabilizer of Figure 2 associated with the stem connecting to a lower arm of a three-point linkage.

With particular reference to such figures, globally indicated by 1 is a side stabilizer for agricultural machines.

The stabilizer 1 comprises a hollow body 2 associable with the structure of an agricultural machine and a cylindrical element 3 associable with the lower arm B of a three-point linkage and fitted sliding within the hollow body 2.

More in detail, the hollow body 2 has an open extremity 2a, through which the cylindrical element 3 is fitted, and the opposite closed extremity 2b.

The hollow body 2 also has connection means 40 for connecting to the structure of an agricultural machine not shown in the figures.

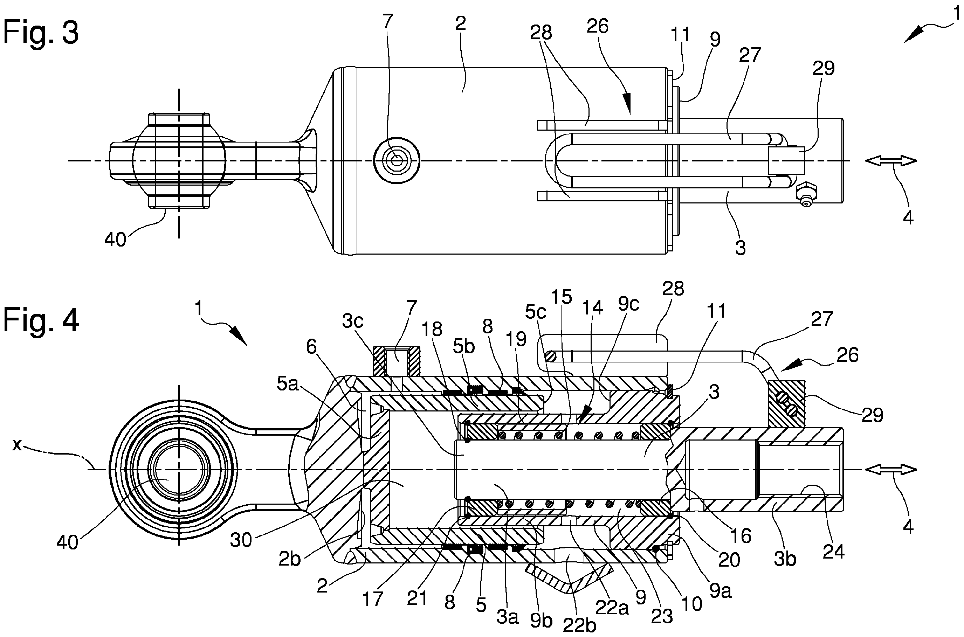

The portion of the cylindrical element 3 that fits inside the hollow body 2 in a predefined neutral position, corresponding to the idle configuration of the stabilizer 1, is identified in Figure 4 with the reference number 3a.

The cylindrical element 3 is then movable with respect to the hollow body 2 along a direction of translation, identified in the figures by the double arrow 4. The direction of translation 4 corresponds to the longitudinal axis X of the cylindrical element 3.

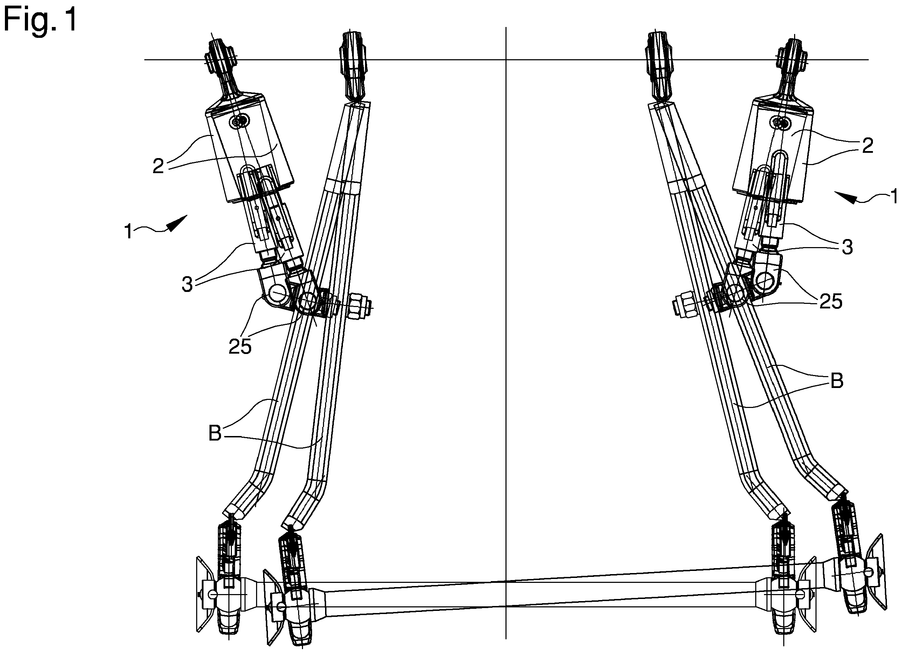

Figure 1 represents a pair of stabilizers 1 each of which is associated with a relative lower arm B. As can easily be seen, the operation of the stabilizers 1 is complementary, i.e. when one works under compression the other works under traction.

The stabilizer 1 also comprises at least a locator element 5 fitted tight and mobile inside the hollow body 2 and the position of which is adjustable in a fluid-dynamic manner to define the end-of-stroke position of the cylindrical element 3 along at least one sense of the direction of translation 4. More in particular, according to the position of the locator element 5 the end-of-stroke position of the cylindrical element 3 is determined in the direction of insertion inside the hollow body 2. Since, as mentioned above, the stabilizers work in pairs, it is easy to understand that, by blocking each of them in the direction of insertion of the corresponding cylindrical element 3 the shift of the latter in both directions is prevented.

In the embodiment shown in the figures, the locator element 5 is placed between the closed extremity 2b and the cylindrical element 3 and delimits a thrust chamber 6 having a passage opening 7 for a work fluid.

Preferably, the locator element 5 is cup c-shaped and has a bottom wall 5a and a side wall 5b, where the latter cooperates with one or more sealing elements 8 associated with the inner wall of the hollow body 2. More particularly, the bottom wall 5a is turned towards the closed extremity 2b, the thrust chamber 6 being placed between them, and the cylindrical element 3 fits in the side wall 5b.

In use, the locator element 5 is movable between at least a floating position, wherein it is moved away from the cylindrical element 3 to allow the shift of the latter with respect to the hollow body 2, and at least a blocking position, wherein it is arranged in the proximity of the cylindrical element 3 to prevent it from shifting along the direction of translation 4 towards the inside of the hollow body 2.

In other words, in the floating position the cylindrical element 3 can move along the direction of translation 4 in both senses, while in the blocking position it can only move in the away direction from the closed extremity 2b.

In the embodiment shown in the figures, the locator element 5 rests, in the floating position, with its bottom wall 5a against the closed extremity 2b of the hollow body 2.

Suitably, the locator element 5 can be moved at least in an intermediate position to the floating position and the blocking position.

Advantageously, the shift of the locator element 5 between the work positions described above may be of the continuous or discreet type.

The stabilizer 1 then comprises protection means 9 for protecting the locator element 5 which are placed between the hollow body 2 and the cylindrical element 3 so as to define a substantially closed chamber 30 (since it may be not sealed) inside which the locator element itself is contained.

The protection means 9 comprise at least a protection element having a tubular conformation and fitted around the cylindrical element 3.

According to the invention, the protection element 9 is fixed with respect to the hollow body 2. More in particular, between the hollow body 2 and the protection element 9 is placed a first stop element 10, able to reciprocally bind them along a first sense of the direction of translation 4, and at least a second stop element 11, able to reciprocally bind them along the opposite sense of the direction of translation 4. The first and the second stop elements 10 and 11 are made up, e.g., of a toroidal elastic ring and of a Seeger ring, respectively.

The protection element 9 covers substantially the entire portion 3a of the cylindrical element 3 fitted within the hollow body 2 in the predefined neutral position.

As visible from Figure 4, the protection element 9 comprises a first portion 9a arranged in correspondence to the open extremity 2a and a second portion 9b that fits inside the locator element 5 and which has a smaller diameter than the first portion 9a.

Suitably, the extremity 3c of the cylindrical element 3 arranged inside the hollow body 2 protrudes slightly with respect to the extremity of the protection element 9.

The first portion 9a of the protection element 9 defines a resting surface 9c of the locator element 5 and, in more detail, of the extremity surface 5c of the side wall 5b. As visible from Figure 4, the extremity surface 5c is substantially parallel to the bottom wall 5a.

Preferably, with the locator element 5 in floating position, the distance between the bottom wall 5a and the extremity 3c of the cylindrical element 3 is less than the distance between the extremity surface 5c and the resting surface 9c, so that in the blocking position the bottom wall 5a rests against the cylindrical element 3.

The stabilizer 1 also comprises contrast means 14 for contrasting the shift of the cylindrical element 3. More in detail, the contrast means 14 are able to apply a return force on the cylindrical element 3 directed in a sense opposite its shift, so as to push it towards the predefined neutral position.

As visible from Figure 4, the contrast means 14 are placed between the cylindrical element 3 and the protection element 9.

Suitably, the contrast means 14 comprise elastic means 15, e.g. composed of a helical spring fitted around a portion of the cylindrical element 3, the extremities of which press against respective stop rings, of which a first ring 16 and a second ring 17, sliding with respect to the cylindrical element itself.

More in detail, the contrast means 14 also comprise a first and a second abutment surfaces integral with the cylindrical element 3 and able to drag the first and second rings 16 and 17 during the shift of the cylindrical element itself towards the inside and towards the outside, respectively, of the hollow body 2. In the embodiment shown in the figures, the first abutment surface is defined by a portion 3b of the cylindrical element 3 having greater diameter than the portion 3a and the second abutment surface is defined by a snap ring 18.

The first and second rings 16 and 17 move therefore in the direction of mutual approaching/moving away as a result of the shift of the cylindrical element 3 along the direction of translation 4.

The neutral position of the cylindrical element 3 corresponds therefore to the arrangement wherein the rings 16 and 17 are located at the maximum distance and the spring 15, which can be suitably pre-loaded, is in idle condition.

The contrast means 14 may also comprise a tubular spacer element 19 associated with the second ring 17.

Preferably, the stabilizer 1 is sized in such a way that, with the locator element 5 in floating position, the stop of the cylindrical element 3 in the direction of insertion inside the hollow body 2 is defined by its extremity 3c resting on the bottom wall 5a and not by the first ring 16 resting against the spacer element 19.

The contact between the spacer element 19 and the first ring 16 defines on the contrary the stop of the cylindrical element 3 in the opposite direction, i.e. in the direction of moving away from the hollow body 2.

Advantageously, the contrast means 14 also comprise a first and second end-of-stroke element 20 and 21 of the first and second ring 16 and 17 respectively along respective lines (opposite between them) of the direction of translation 4. As known to the technician in the sector, the first and second end-of-stroke elements 20 and 21 are able to prevent the first ring 16 from being dragged by the cylindrical element 3 in its shift towards the outside of the hollow body 2 and the second ring 17 from being dragged by the cylindrical element 3 in its shift towards the inside of the hollow body 2, respectively.

The protection element 9 integrally supports the first and second end-of-stroke elements 20 and 21. More particularly, the first and second end-of-stroke elements 20 and 21 are composed of respective toroidal elastic rings inserted in respective seats defined on the inner side surface of the protection element 9, with respect to which they protrude.

Advantageously, the stabilizer 1 also comprises disposal means of the impurities that accumulate in the area 23 placed between the protection element 9 and the cylindrical element 3. Such impurities may be deposited e.g. on the outer surface of the cylindrical element 3 when the latter shifts towards the outside of the hollow body 2 and are then taken within the aforementioned area 23 following its return to the neutral position.

The disposal means comprise at least one first through hole 22a, defined on the protection element 9 and communicating on one side with the area 23 and on the other side with the chamber 30, and a second through hole 22b, defined on the hollow body 2 and communicating on one side with the chamber 30 and on the other with the outside. Preferably, the disposal means comprise a plurality of first holes 22a arranged along a circumference of the protection element 9 and spaced from one another. The impurities that accumulate in the area 23 are therefore disposed of outwards, passing in succession through the first and the second hole 22a and 22b.

The cylindrical element 3 also has a threaded hole 24, facing outwards, wherein it is engaged by screwing the stem 25 which ends at the extremity with a connection member to the lower arm of a three-point linkage. The cylindrical element 3 is also movable in rotation around its longitudinal axis X with respect to the hollow body 2. By rotating the cylindrical element 3 with respect to the hollow body 2 it is therefore possible to adjust the position of the stem 25 with respect to the cylindrical element 3 and, therefore, the length of the stabilizer 1. Suitably, the stabilizer 1 comprises anti-rotation means 26 able to prevent the accidental rotation, in use, of the cylindrical element 3 around the axis X.

The anti-rotation means 26 comprise at least a lever 27 associated with the cylindrical element 3 and blocking means 28 associated with the outer surface of the hollow body 2 and able to prevent the rotation of the lever 27 around the longitudinal axis of the cylindrical element 3 .

More in detail, the lever 27 is hinged to an appendix 29 which projects radially outwardly from the cylindrical element 3 and is movable between a work configuration, wherein it is locked in rotation by the blocking means 28 (which still allow the shift of the cylindrical element itself along the direction of translation 4) and a rotation configuration, wherein it is released from the blocking means 28 to allow the rotation of the cylindrical element 3 around its own axis X.

Preferably, the blocking means 28 comprise at least a pair of blocking walls arranged on opposite sides of the lever 27, with the latter in the work position. This particular conformation of the blocking means 28 allows to avoid that the lever 27, generally consisting of a metal wire or the like folded on itself, is being extended following the contact with the blocking walls themselves.

The operation of the present invention is as follows.

According to the particular working needs, the position of the locator element 5 inside the chamber 30 shall be adjusted in a fluid-dynamic manner. The position of the locator element 5 may be adjusted e.g. by means of a fluid-dynamic circuit (not being part of the present invention) which can be connected to the passage opening 7 and to a sensor able to detect the lifting of the lower arm B of the three-point linkage. The fluid-dynamic circuit is then able to connect the passage opening 7 to a supply line of a work fluid under pressure or with a drain line.

In the event of the locator element 5 being arranged in floating position, i.e. with the bottom wall 5a resting against the closed extremity 2b, the cylindrical element 3 is free to move in both senses of the direction of translation 4.

In such work condition, the cylindrical element 3 then moves towards the inside or towards the outside of the hollow body 2 depending on the force being applied on the stem 25.

During the shift of the cylindrical element 3 along the direction of translation 4, the rings 16 and 17 move in the direction of mutual approaching or moving away by translating with respect to the protection element 9.

More particularly, when the cylindrical element 3 shifts from the neutral position towards the closed extremity 2b, the shoulder defined by the portion 3b of the cylindrical element 3 drags in translation the first ring 16, while the second ring 17 remains stationary as a result of its resting against the second end-of-stroke element 21. As mentioned above, the stop of the cylindrical element 3 in the direction of approaching the closed extremity 2b can be defined by the first ring 16 resting against the spacer element 19 or, preferably, by the extremity 3c resting against the bottom wall 5a.

During the return phase to the neutral position, the first ring 16 moves away from the second ring 17, sliding with respect to the cylindrical element 3 and the protection element 9, due to the thrust of the spring 15.

Similarly, when the cylindrical element 3 moves away from the closed extremity 2b, the snap ring 18 drags in translation the second ring 17, while the first ring 16 remains stationary due to its resting with the first end-of-stroke element 20. In this case, the stop of the cylindrical element 3 is defined by the spacer element 19 resting with the first ring 16.

During the return phase to the neutral position, the second ring 17 moves away from the first ring 16, sliding with respect to the cylindrical element 3 and the protection element 9, due to the thrust of the spring 15.

During the operation of the stabilizer 1, the protection element 9 remains stationary with respect to the hollow body 2, thus avoiding the side wall 5b, which cooperates with the sealing elements 8 to ensure the tightness of the thrust chamber 6, being accessible directly from the outside. The locator element 5 is thus completely contained within the chamber 30 both in floating position and in blocking position.

By changing the position of the locator element 5 inside the chamber 30 the end-of-stroke position of the cylindrical element 3 changes accordingly in the direction of insertion within the hollow body 2, while the shift of the cylindrical element itself in the opposite direction remains unchanged.

In particular, when the locator element 5 is brought to the blocking position, the shift of the locator element 3 is restrained towards the inside of the hollow body 2.

When the cylindrical element 3 is in extracted position with respect to the hollow body 2, at least a length of its portion 3a is accessible from the outside, so that any impurities and debris can be deposited on it and thus be brought within the area 23 following the return of the cylindrical element 3 in the neutral position.

In this case, the holes 22a and 22b allow the impurities or debris that collect in the area 23 to flow outside so as to ensure proper operation of the stabilizer 1 over time.

In use, the lever 27 is brought to the work configuration so as to prevent, through contact with the blocking walls 28, the rotation of the cylindrical element 3 with respect to the hollow body 2.

If, on the contrary, one wish to modify the length of the stabilizer 1, the lever 27 is brought to the rotation configuration so as to be able to rotate the cylindrical element 3 around the axis X thus changing accordingly the position of the stem 25 within the hole 24.

It has in practice been ascertained how the described invention achieves the proposed objects and in particular the fact is underlined that the stabilizer according to the invention proves to be reliable in operation, since the presence of the protection element allows to avoid that the outer surface of the locator element can be subject to shock or damage during the working phases.

In particular, by protecting the outer surface of the locator element the sealing with the hollow body is ensured.

Furthermore, the presence of the disposal means of impurities ensure the proper and ready operation of the stabilizer even under particularly harsh working conditions.

Moreover, the conformation of the blocking plate allows to avoid that the rotation lever may become detached from the cylindrical element following the operation of the anti-rotation means.

## Claims

1. Side stabilizer (1) for agricultural machines comprising:
a hollow body (2) open at one extremity (2a) and closed at the opposite extremity (2b) which is associable with the structure of an agricultural machine, a cylindrical element (3) fitted sliding inside said hollow body (2) along a direction of translation (4) and associable with the lower arm (B) of a three-point linkage,
at least one locator element (5) fitted tight and mobile inside said hollow body (2) and the position of which is adjustable in a fluid-dynamic manner to adjust the end-of-stroke position of said cylindrical element (3) along at least one sense of said direction of translation (4),
protection means (9) of said locator element (5) placed between said hollow body (2) and said cylindrical element (3) so as to define a substantially closed chamber (30) inside which the locator element itself is contained, wherein said protection means (9) comprise at least a protection element having a substantially tubular conformation and fitted around said cylindrical element (3) and **characterized in that** said protection element (9) is fixed with respect to said hollow body (2).

2. Side stabilizer (1) according to claim 1, **characterized in that** said locator element (5) is placed between said hollow body (2) and said cylindrical element (3) and is substantially cup-shaped and **in that** said protection element (9) has a first portion (9a) arranged in correspondence to the open extremity (2a) of the hollow body (2) and at least a second portion (9b) fitted inside said locator element (5), said first portion (9a) having greater diameter than said second portion (9b).

3. Side stabilizer (1) according to claim 1 or 2, **characterized in that** said first portion (9a) defines a resting surface (9c) of said locator element (5).

4. Side stabilizer (1) according to one or more of the preceding claims, **characterized in that** it comprises contrast means (14) of the shift of said cylindrical element (3) with respect to said hollow body (2) which are placed between said protection element (9) and the cylindrical element itself.

5. Side stabilizer (1) according to claim 4, **characterized in that** said contrast means (14) comprise elastic means (15) the extremities of which press against respective stop rings (16, 17), said protection element (9) integrally supporting a first end-of-stroke element (20) for the shift of one of said stop rings (16, 17) along one sense of the direction of translation (4) and a second end-of-stroke element (21) of the other of said stop rings (17, 16) along the opposite sense.

6. Side stabilizer (1) according to one or more of the preceding claims, **characterized in that** said protection element (9) covers substantially the entire portion (3a) of said cylindrical element (3) contained inside said hollow body (2) in a neutral position.

7. Side stabilizer (1) according to one or more of the preceding claims, **characterized in that** it comprises disposal means (22) of the impurities which accumulate in the area (23) placed between said protection element (9) and said cylindrical element (3).

8. Side stabilizer (1) according to claim 9, **characterized in that** said disposal means (22) comprise at least a first through hole (22a), defined on said protection element (9) and communicating with said closed chamber (30), and at least a second through hole (22b), defined on said hollow body (2) and communicating, this too, with the closed chamber (30).

9. Side stabilizer (1) according to one or more of the preceding claims, **characterized in that** said locator element (5) can be moved between at least a floating position, wherein it is moved away from said cylindrical element (3) to allow the shift of the latter with respect to said hollow body (2), and a blocking position, wherein it is arranged in the proximity of said cylindrical element (3) to prevent it from shifting with respect to the hollow body (2).

10. Side stabilizer (1) according to one or more of the preceding claims, **characterized in that**, with said locator element (5) in floating position, the distance between the extremity surface (5c) of the side wall (5b) of the locator element itself and the resting surface (9c) defined by said protection element (9) is greater than the distance between the extremity (3c) of said cylindrical element (3) and the bottom wall (5a) of said locator element (5).

11. Side stabilizer (1) according to one or more of the preceding claims, **characterized in that** said cylindrical element (3) can be rotated with respect to said hollow body (2) around its longitudinal axis (X) and **in that** it comprises anti-rotation means (26) of the cylindrical element (3) itself which comprise at least a lever (27) connected to said cylindrical element (3) and blocking means associated with said hollow body (2) and able to prevent said lever (27) from rotating with respect to said longitudinal axis (X), said blocking means comprising a pair of blocking walls (28) arranged on opposite sides of the lever itself.

## Patentansprüche

1. Seitenstabilisator (1) für Landmaschinen, umfassend:
einen an einem Ende (2a) offenen und an dem gegenüberliegenden Ende (2b) geschlossenen Hohlkörper (2), der mit der Struktur einer Landmaschine verbindbar ist, wobei ein zylindrisches Element (3) innerhalb des Hohlkörpers (2) entlang einer Verschieberichtung (4) verschiebbar angeordnet und mit dem unteren Arm (B) eines Dreipunktgestänges verbindbar ist,
mindestens ein Fixierelement (5), das in den Hohlkörper (2) dicht und beweglich angeordnet ist und dessen Position fluiddynamisch einstellbar ist, um die Endlage des zylindrischen Elements (3) entlang mindestens einer Richtung der Verschieberichtung (4) einzustellen,
Schutzmittel (9) des Fixierelements (5), die zwischen dem Hohlkörper (2) und dem zylindrischen Element (3) angeordnet sind, um eine im wesentlichen geschlossene Kammer (30) zu definieren, in der das Fixierelement selbst enthalten ist, wobei die Schutzmittel (9) mindestens ein Schutzelement umfassen, das eine im wesentlichen röhrenförmige Gestalt aufweist und um das zylindrische Element (3) herum angeordnet und **dadurch gekennzeichnet ist, dass** das Schutzelement (9) in Bezug auf den Hohlkörper (2) fest angebracht ist.

2. Seitenstabilisator (1) nach Anspruch 1, **dadurch gekennzeichnet, dass** das Fixierelement (5) zwischen dem Hohlkörper (2) und dem zylindrischen Element angeordnet und im Wesentlichen becherförmig ist und dass das Schutzelement (9) einen ersten Abschnitt (9a), der in Übereinstimmung mit dem offenen Ende (2a) des Hohlkörpers (2) angeordnet ist, und zumindest einen zweiten Abschnitt (9b) aufweist, der in dem Fixierelement (5) angeordnet ist, wobei der erste Abschnitt (9a) einen größeren Durchmesser als der zweite Abschnitt (9b) aufweist.

3. Seitenstabilisator (1) nach Anspruch 1 oder 2, **dadurch gekennzeichnet, dass** der erste Abschnitt (9a) eine Auflagefläche (9c) des Fixierelements (5) definiert.

4. Seitenstabilisator (1) nach einem oder mehreren der vorhergehenden Ansprüche, **dadurch gekennzeichnet, dass** er Kontrastmittel (14) des Verschiebens des zylindrischen Elements (3) in Bezug auf den Hohlkörper (2) umfasst, die zwischen dem Schutzelement (9) und dem zylindrischen Element selbst angeordnet sind.

5. Seitenstabilisator (1) nach Anspruch 4, **dadurch gekennzeichnet, dass** die Kontrastmittel (14) elastische Mittel (15) aufweisen, deren Enden gegen jeweilige Anschlagringe (16, 17) drücken, wobei das Schutzelement (9) ein erstes Endlagenelement (20) für das Verschieben eines der Anschlagringe (16, 17) entlang einer Richtung der Verschieberichtung (4) und ein zweites Endlagenelement (21) des anderen der Anschlagringe (17, 16) entlang der entgegengesetzten Richtung ganzheitlich abstützt.

6. Seitenstabilisator (1) nach einem oder mehreren der vorhergehenden Ansprüche, **dadurch gekennzeichnet, dass** das Schutzelement (9) im Wesentlichen den gesamten Abschnitt (3a) des zylindrischen Elements (3) abdeckt, das innerhalb des Hohlkörpers (2) in einer neutralen Position aufgenommen ist.

7. Seitenstabilisator (1) nach einem oder mehreren der vorhergehenden Ansprüche, **dadurch gekennzeichnet, dass** er Mittel (22) zum Entsorgen der Verunreinigungen umfasst, die sich in dem Bereich (23) ansammeln, der zwischen dem Schutzelement (9) und dem zylindrischen Element (3) angeordnet ist.

8. Seitenstabilisator (1) nach Anspruch 9, **dadurch gekennzeichnet, dass** die Mittel (22) zum Entsorgen zumindest ein erstes Durchgangsloch (22a), das auf dem Schutzelement (9) definiert ist und mit der geschlossenen Kammer (30) in Verbindung steht, und zumindest ein zweites Durchgangsloch (22b) umfassen, das auf dem Hohlkörper (2) definiert ist und auch mit der geschlossenen Kammer (30) in Verbindung steht.

9. Seitenstabilisator (1) nach einem oder mehreren der vorhergehenden Ansprüche, **dadurch gekennzeichnet, dass** das Fixierelement (5) zwischen zumindest einer Schwimmstellung, bei der es von dem zylindrischen Element (3) wegbewegt wird, um das Verschieben des letzteren in Bezug auf den Hohlkörper (2) zu ermöglichen, und einer Sperrstellung, bei der es in der Nähe des zylindrischen Elements (3) angeordnet ist, um dessen Verschieben in Bezug auf den Hohlkörper (2) zu verhindern, bewegt werden kann.

10. Seitenstabilisator (1) nach einem oder mehreren der vorhergehenden Ansprüche, **dadurch gekennzeichnet, dass** mit dem Fixierelement (5) in Schwimmposition der Abstand zwischen der Endfläche (5c) der Seitenwand (5b) des Fixierelements selbst und der Auflagefläche (9c), die von dem Schutzelement (9) definiert wird, größer ist als der Abstand zwischen dem Ende (3c) des zylindrischen Elements (3) und der unteren Wand (5a) des Fixierelements (5).

11. Seitenstabilisator (1) nach einem oder mehreren der vorhergehenden Ansprüche, **dadurch gekennzeichnet, dass** das zylindrische Element (3) in Bezug auf den Hohlkörper (2) um seine Längsachse (X) gedreht werden kann und dass es Drehsicherungsmittel (26) des zylindrischen Elements (3) selbst, die zumindest einen Hebel (27), der mit dem zylindrischen Element (3) verbunden ist, sowie Sperrmittel umfassen, die mit dem Hohlkörper (2) in Verbindung stehen und in der Lage sind, zu verhindern, dass sich der Hebel (27) in Bezug auf die Längsachse (X) dreht, wobei die Sperrmittel ein Paar Sperrwände (28) umfassen, die auf entgegengesetzten Seiten des Hebels selbst angeordnet sind.

## Revendications

1. Stabilisateur latéral (1) pour les machines agricoles comprenant :
un corps creux (2) ouvert à une extrémité (2a) et fermé à l'extrémité opposée (2b) qui est apte à être associé à la structure d'une machine agricole,
un élément cylindrique (3) agencé de manière coulissante dans ledit corps creux (2) selon une direction de translation (4) et apte à être associé au bras inférieur (B) d'un attelage trois-points,
au moins un élément de positionnement (5) agencé de manière étanche et mobile à l'intérieur dudit corps creux (2) et dont la position est réglable en utilisant une dynamique de fluide pour régler la position de fin de course dudit élément cylindrique (3) selon au moins un sens de ladite direction de translation (4),
des moyens de protection (9) dudit élément de positionnement (5) placés entre ledit corps creux (2) et ledit élément cylindrique (3) afin de définir une chambre sensiblement fermée (30) à l'intérieur de laquelle l'élément de positionnement lui-même est contenu, dans lequel lesdits moyens de protection (9) comprennent au moins un élément de protection présentant une conformation sensiblement tubulaire et agencé autour dudit élément cylindrique (3) et **caractérisé en ce que** ledit élément de protection (9) est fixe par rapport audit corps creux (2).

2. Stabilisateur latéral (1) selon la revendication 1, **caractérisé en ce que** ledit élément de positionnement (5) est placé entre ledit corps creux (2) et ledit élément cylindrique (3) et est sensiblement en forme de coupelle et **en ce que** ledit élément de protection (9) comprend une première portion (9a) agencée en correspondance avec l'extrémité ouverte (2a) du corps creux (2) et au moins une seconde portion (9b) agencée à l'intérieur dudit élément de positionnement (5), ladite première portion (9a) présentant un diamètre plus grand que ladite seconde portion (9b).

3. Stabilisateur latéral (1) selon la revendication 1 ou 2, **caractérisé en ce que** ladite première portion (9a) définit une surface d'appui (9c) dudit élément de positionnement (5).

4. Stabilisateur latéral (1) selon l'une ou plusieurs des revendications précédentes, **caractérisé en ce qu'**il comprend des moyens d'amortissement (14) du déplacement dudit élément cylindrique (3) par rapport audit corps creux (2) qui sont placés entre ledit élément de protection (9) et l'élément cylindrique lui-même.

5. Stabilisateur latéral (1) selon la revendication 4, **caractérisé en ce que** lesdits moyens d'amortissement (14) comprennent des moyens élastiques (15) dont les extrémités s'appuient contre des bagues d'arrêt respectives (16, 17), ledit élément de protection (9) supportant solidairement un premier élément de fin de course (20) pour le déplacement de l'une desdites bagues d'arrêt (16, 17) selon un sens de ladite direction de translation (4) et un second élément de fin de course (21) de l'autre desdites bagues d'arrêt (17, 16) selon le sens opposé.

6. Stabilisateur latéral (1) selon l'une ou plusieurs des revendications précédentes, **caractérisé en ce que** ledit élément de protection (9) couvre sensiblement la totalité de la portion (3a) dudit élément cylindrique (3) contenue à l'intérieur dudit corps creux (2) dans une position neutre.

7. Stabilisateur latéral (1) selon l'une ou plusieurs des revendications précédentes, **caractérisé en ce qu'**il comprend des moyens d'élimination (22) des impuretés qui s'accumulent dans la région (23) située entre ledit élément de protection (9) et ledit élément cylindrique (3).

8. Stabilisateur latéral (1) selon la revendication 9, **caractérisé en ce que** lesdits moyens d'élimination (22) comprennent au moins un premier trou traversant (22a), défini sur ledit élément de protection (9) et communiquant avec ladite chambre fermée (30), et au moins un second trou traversant (22b), défini sur ledit corps creux (2) et communiquant, celui-ci aussi, avec la chambre fermée (30).

9. Stabilisateur latéral (1) selon l'une ou plusieurs des revendications précédentes, **caractérisé en ce que** ledit élément de positionnement (5) peut être déplacé entre au moins une position flottante, dans laquelle il est éloigné dudit élément cylindrique (3) pour permettre le déplacement de ce dernier par rapport audit corps creux (2), et une position de blocage, dans laquelle il est agencé à proximité dudit élément cylindrique (3) pour l'empêcher de se déplacer par rapport au corps creux (2).

10. Stabilisateur latéral (1) selon l'une ou plusieurs des revendications précédentes, **caractérisé en ce que**, avec ledit élément de positionnement (5) en position flottante, la distance entre la surface d'extrémité (5c) de la paroi latérale (5b) de l'élément de positionnement lui-même et la surface d'appui (9c) définie par ledit élément de protection (9) est supérieure à la distance entre l'extrémité (3c) dudit élément cylindrique (3) et la paroi de fond (5a) dudit élément de positionnement (5).

11. Stabilisateur latéral (1) selon l'une ou plusieurs des revendications précédentes, **caractérisé en ce que** ledit élément cylindrique (3) peut être entraîné en rotation par rapport audit corps creux (2) autour de son axe longitudinal (X) et **en ce qu'**il comprend des moyens anti-rotation (26) de l'élément cylindrique (3) lui-même qui comprennent au moins un levier (27) relié audit élément cylindrique (3) et des moyens de blocage associés audit corps creux (2) et aptes à empêcher ledit levier (27) de tourner en rotation par rapport audit axe longitudinal (X), lesdits moyens de blocage comprenant une paire de parois de blocage (28) agencées sur des côtés opposés du levier lui-même.
